# EUROPÄISCHE PATENTANMELDUNG

(11) **EP 0 908 994 A1**
(43) Veröffentlichungstag der Anmeldung: **14.04.1999**
(21) Anmeldenummer: 98114148.4
(22) Anmeldetag: 29.07.1998
(51) Int. Cl.: H02G 9/10, G02B 6/44, H02G 15/10

(54) **Einzugs- und Verteilerrohr für die Telekommunikations- und Datentechnik**

(30) Priorität: 20.08.1997 DE 19736705
(71) Anmelder: KRONE Aktiengesellschaft, 14167 Berlin (DE)
(72) Erfinder: Sander, Claus, Dipl.-Ing., 10717 Berlin (DE)

(57) **Zusammenfassung**

Die Erfindung bezieht sich auf ein Einzugs- und Verteilerrohr für die Telekommunikations- und Datentechnik, insbesondere zum Einbringen in Kabelgräben.

Die Aufgabe der Erfindung, ein für Kupfer- und für Glasfaser-Kabel gleichermaßen anwendbares Einzugs- und Verteilerrohr zu entwickeln, mit dem an den Kreuzungs- und Abzweigpunkten des Kabel-Rohrsystems der Telekommunikations- und Datentechnik der Zugriff zu Kabeln, Muffen und Verteilern und gegebenenfalls zu elektronischen Einrichtungen mit geringem Aufwand zuverlässig gewähleistet wird, wird dadurch gelöst, daß ein Sockelteil 3 mit eingesetzten oder angeformten Rohrstutzen 4 zum Anmuffen von Kabelrohren 7 mit einem Verteilerrohr 2 zur Aufnahme eines Kabelverteilers 5 und einer Kabel-Reservelänge 8 wasserdicht verbunden ist, wobei das Verteilerrohr 2 durch einen Deckel 6 verschlossen ist.

## Beschreibung

Die Erfindung bezieht sich auf ein Einzugs- und Verteilerrohr für die Telekommunikations- und Datentechnik, insbesondere zum Einbringen in Kabelgräben.

In den bestehenden Ortskabelnetzen sind an den Kreuzungs- und Abzweigpunkten des Kabel-Rohrsystems Kabelschächte mit Kabelschachtabdeckungen vorgesehen, über die der Zugriff zu den Kabeln und Muffen besteht, um die Kabel in verschiedene Richtungen abzuzweigen und zu verteilen. Diese aus Betonelementen gestalteten, begehbaren Kabelschächte haben einen großen Platzbedarf und sind aufwendig in der Herstellung. Es wird Baukapazität benötigt und es bestehen in den Ballungszentren der Städte Schwierigkeiten, diese Kabelschächte platzmäßig unterzubringen.

Der Erfindung liegt die Aufgabe zugrunde, ein für Kupfer- und für Glasfaser-Kabel gleichermaßen anwendbares Einzugs- und Verteilerrohr zu entwickeln, mit dem an den Kreuzungs- und Abzweigpunkten des Kabel-Rohrsystems der Telekommunikations- und Datentechnik der Zugriff zu Kabeln, Muffen, Verteilern und gegebenenfalls elektronischen Einrichtungen mit geringem Aufwand zuverlässig gewährleistet wird.

Die Lösung dieser Aufgabe ergibt sich aus den Merkmalen des Anspruches 1. Das erfindungsgemäße Einzugs- und Verteilerrohr besteht aus einem Sockelteil mit mehreren, vorzugsweise vier Segmenten, die mit Rohrstutzen zum Anmuffen der handelsüblichen Kabelrohre versehen sind, und aus einem Verteilerrohr mit Deckel, in welches ein Verteiler, Kabel-Reservelängen und elektronische Einrichtungen eingebracht werden können. Das Einzugs- und Verteilerrohr ist den Abmessungen der bestehenden Kabelgräben angepaßt und erfordert nur einen geringen Platzbedarf und wenig Erd- bzw. Bauarbeiten und kann der Anzahl der Kabel und der Tiefe des Grabens angepaßt vorgefertigt und montiert werden.

Die gerade oder schräg in das Sockelteil eingesetzten Rohrstutzen erlauben das leichte Einziehen der Kabel mit runden Gleitflächen bei großem Biegeradius und gewährleisten eine gute Erreichbarkeit der Kabel beim Einfädeln mit der Hand oder Zugmitteln. Die Herstellung der Sockelsegmente kann in vielen Ausführungsformen mit keinem oder mit einer Vielzahl von Rohrstutzen auf Spritzmaschinen mit Werkzeugen ohne Schieber erfolgen. Die verschiedenartig ausgeführten Sockelsegmente können beliebig zusammengesetzt werden. Die Sockelsegmente können durch Dichtungsmittel wie Dichtungsschnüre wasserdicht miteinander verbunden werden.

Weitere vorteilhafte Ausgestaltungen der Erfindung ergeben sich aus den Unteransprüchen.

Die Erfindung ist nachfolgend anhand eines in den Zeichnungen dargestellten Ausführungsbeispieles eines Einzugs- und Verteilerrohrs näher erläutert. Es zeigen:
- Fig. 1: die schematische Seitenansicht eines Einzugs- und Verteilerrohrs,
- Fig. 2: die Draufsicht auf das Sockelteil des Einzugs- und Verteilerrohrs nach Fig. 1 und
- Fig. 3: die schematische Draufsicht auf ein Sockelsegment des Einzugs- und Verteilerrohrs nach den Fig. 1 und 2.

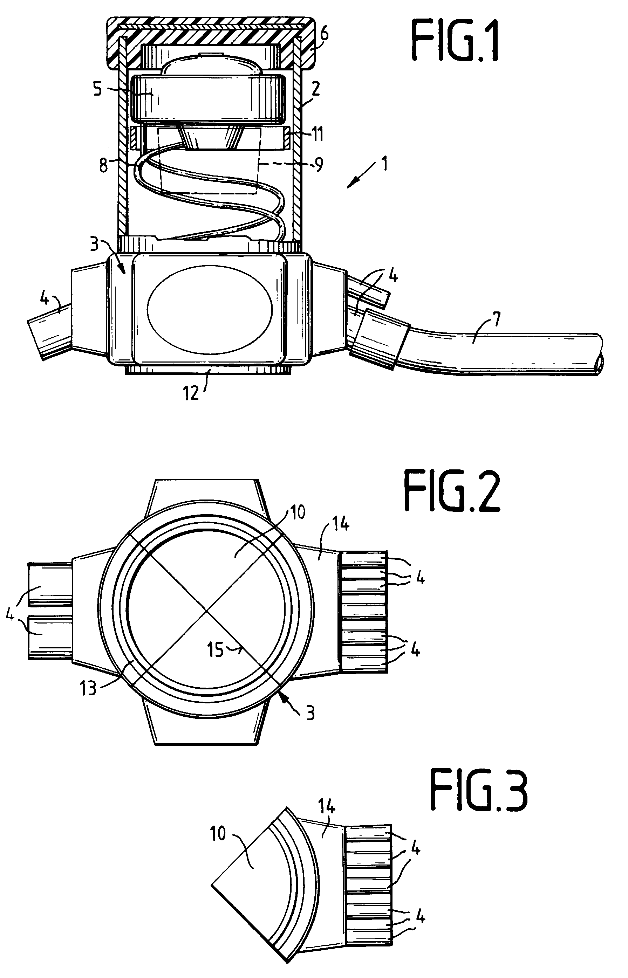

Die Fig. 1 zeigt die Seitenansicht eines Einzugs- und Verteilerrohres 1 in einer schematischen Darstellung. Danach besteht das Einzugs- und Verteilerrohr 1 im wesentlichen aus einem Sockelteil 3, einem Verteilerrohr 2, einem Deckel 6.

Das Sockelteil 3 besteht aus vier Sockelselsegmenten 10, an die jeweils unterschiedlich dimensionierte Rohrstutzen 4 angesetzt sind (Fig. 2 und 3).

Die Rohrstutzen 4 eines Sockelsegmentes 10 nach Fig. 3 können unterschiedliche Durchmesser aufweisen. Es können sowohl unterschiedliche Rohrstutzen 4 als auch eine unterschiedliche Anzahl von Rohrstutzen 4 in einem Segment 10 vorgesehen sein.

Die Sockelsegmente 10 sind durch Dichtungselemente 15 wasserdicht verfugt.

Rohrstutzen 4, welche als Reservestutzen zunächst nicht benutzt werden, brauchen auch nicht aufgeschnitten und abgedichtet zu werden.

Das Sockelteil 3 mit den Rohrstutzen 4 dient im Erdreich als Anker gegen Aufschwimmen für das gesamte Einzugs- und Verteilerrohr 1 bei Grundwasser.

Das Sockelteil 3 ist mit Sockelansätzen 14 versehen (Fig. 2,3), die den unteren Sockelraum vergrößern und ein wendelförmiges Führen der Kabel als Kabel-Reservelänge 8 zum Verteiler 5 erleichtern. Durch das wendelförmige Führen der Kabel entsteht ein Wendelinnenraum 9, in den elektronisches oder optoelektronisches Zubehör wie Multiplexer unterhalb des Verteilers 5 eingebracht werden können. Die Kabelwendel 8 erlaubt das Herausnehmen des Verteilers 5 ohne die Kabel übermäßig zu biegen, was besonders bei der Beschaltung mit Glasfaser-Kabel wichtig ist.

In das Sockelteil 3 ist von oben das Verteilerrohr 2 eingesetzt. Das Sockelteil 3 ist unten durch ein Spannband 12 gesichert (Fig. 1). Oben wird das Sockelteil 3 durch das in eine Nut 13 des Sockelteils 3 eingedrückte Rohr 2 zusammengehalten (Fig. 2) und durch einen wasserfesten Kleber mit dem Rohr 2 wasserdicht verbunden.

Der Deckel 6 ist mit einem nicht dargestellten labyrinthartigen Rand ausgebildet, der das Verteilerrohr 2 nach oben wasser- und insektendicht verschließt.

Der Verteiler 5 ist dicht unterhalb des Deckels 6 leicht zugänglich auf einer Auflage 11 angeordnet und kann beliebig, vorzugsweise kreisförmig ausgebildet sein.

### BEZUGSZEICHENLISTE

- 01: Einzugs- und Verteilerrohr
- 02: Verteilerrohr
- 03: Sockelteil
- 04: Rohrstutzen
- 05: Verteiler
- 06: Deckel
- 07: Kabelrohr
- 08: Kabel-Reservelänge
- 09: Raum
- 10: Sockelsegment
- 11: Auflage
- 12: Spannband
- 13: Nut
- 14: Sockelansatz
- 15: Dichtungselement

## Patentansprüche

1. Einzugs- und Verteilerrohr für die Telekommunikations- und Datentechnik, insbesondere zum Einbringen in Kabelgräben,
**dadurch gekennzeichnet,** daß
ein Sockelteil (3) mit eingesetzten oder angeformten Rohrstutzen (4) zum Anmuffen von Kabelrohren (7) mit einem Verteilerrohr (2) zur Aufnahme eines Kabelverteilers (5) und einer Kabel-Reservelänge (8) wasserdicht verbunden ist, wobei das Verteilerrohr (2) durch einen Deckel (6) verschlossen ist.

2. Einzugs- und Verteilerrohr nach Anspruch 1, dadurch gekennzeichnet, daß die Rohrstutzen (4) in das Sockelteil (3) schräg eingesetzt oder angeformt sind.

3. Einzugs- und Verteilerrohr nach Anspruch 1, dadurch gekennzeichnet, daß das Sockelteil (3) aus mindestens vier Segmenten (10) kombiniert ist.

4. Einzugs- und Verteilerrohr nach Anspruch 1, dadurch gekennzeichnet, daß die Sockelabmessungen und die Abmessungen des Verteilerrohrs (2) den Abmessungen des Kabelgrabens entsprechend gewählt sind.

5. Einzugs- und Verteilerrohr nach Anspruch 3, dadurch gekennzeichnet, daß die Sockelsegmente (10) mit einer unterschiedlichen Anzahl von Rohrstutzen (4) und mit unterschiedlichen Ausführungsformen der Rohrstutzen (4) ausgeführt sind und beliebig zu einem Sockelteil (3) zusammensetzbar sind.

6. Einzugs- und Verteilerrohr nach Anspruch 5, dadurch gekennzeichnet, daß die Sockelteile (10) in Spritzguß hergestellt sind.

7. Einzugs- und Verteilerrohr nach Anspruch 1, dadurch gekennzeichnet, daß das Sockelteil (3) einen Sockelansatz (14) aufweist.

8. Einzugs- und Verteilerrohr nach Anspruch 1, dadurch gekennzeichnet, daß der Kabelverteiler (5) dicht unter dem Deckel (6) auf einer Auflage (11) angeordnet ist, wobei der Deckelrand labyrinthartig ausgestaltet ist.

9. Einzugs- und Verteilerrohr nach Anspruch 1, dadurch gekennzeichnet, daß die Kabel-Reservelänge (8) wendelförmig geführt ist und daß in dem Wendelinnenraum (9) unterhalb des Verteilers (5) elektronische Einrichtungen angeordnet werden können.
